# EUROPEAN PATENT SPECIFICATION

(11) **EP 3 897 095 B1**
(45) Date of publication and mention of the grant of the patent: **23.08.2023**
(21) Application number: 19798733.2
(22) Date of filing: 29.10.2019
(51) Int. Cl.: A01D 69/00

(54) **COMBINE WITH DRIVES INTEGRATED IN THE FRAME**
MÄHDRESCHER MIT IM CHASSIS INTEGRIERTEN ANTRIEB
MOISSONNEUSE BATTEUSE AVEC ENTRAÎNEMENT INTÉGRÉ DANS LE CHÂSSIS

(30) Priority: 19.12.2018 US 201862781655 P
(43) Date of publication of application: 27.10.2021
(73) Proprietor: Agco Corporation, Duluth, Georgia 30096 (US)
(72) Inventor: DUCROQUET, Frederic, Kenilworth Warwickshire CV8 2TQ (GB)
(74) Representative: AGCO Intellectual Property Department
(86) International application number: PCT/IB2019/059256
(87) International publication number: WO 2020/128660

(56) References cited:
- FR-A5- 2 190 072
- US-A- 2 888 088
- US-A- 4 009 556

## Description

### Field of Invention

The present invention relates to an arrangement of drivelines in combine harvesters.

### Background of invention

Combine harvesters are complex machines with a number of systems which require drive power to be transferred from an engine to systems at various points on the vehicle. Space for the drivelines for this power transfer must be found within an overall width envelope which is initially defined in most cases by regulations limiting the maximum on-road width of the overall machine. The drivelines for the systems must compete for this width with the systems themselves, as well as other components of the vehicle such as, particularly, wheels and tyres which are required for the machine to move. An area of particular difficulty may often be found therefore between the front wheels of a combine harvester, where a feed beater is often located. Within the inner width envelope defined by the inner walls of the tyres of the front wheels of the machine, there must be located not just the feed beater itself, but also a driveline to drive the beater, which is often a belt and pulley drive system. This belt/pulley driveline is normally located on one side of the machine. Additionally within this inner width envelope there must also be found space to pass a header driveline, normally on the other side of the machine, which provides power to the header at the front of the machine from a point behind the front wheels of the machine. This header drive normally comprises a drive shaft.

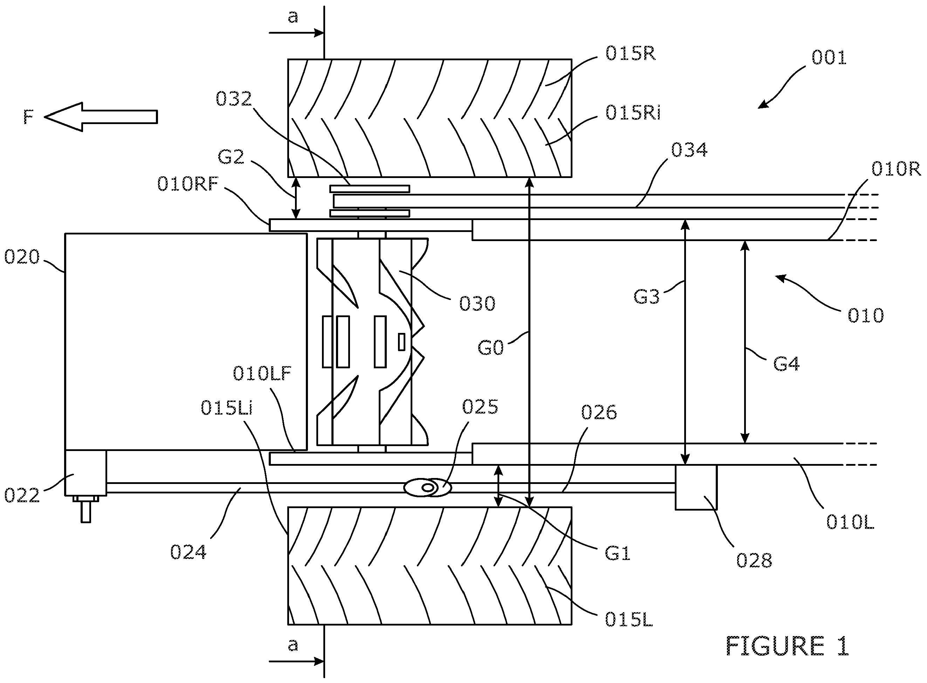

Both these drivelines are normally located on the outer sides of a chassis of the machine. This then constrains the width of the chassis of the machine, and consequently also constrains the width of systems and system components within the chassis, such as the feed beater between the wheels, but also other components such as the thresher and cleaning shoe. This is illustrated in Figure 1.

Figure 1 shows a schematic plan view of a typical prior art arrangement of some components of a combine harvester.

Figure 1 shows a combine harvester 001 with a chassis 010 comprising two main chassis members 010L and 010R. In use the combine will normally move forwards in the direction of arrow F, and references herein to forwards, backwards, front and rear and other directional references are generally in relation to this. The main chassis members 010L and 010R are constructed so as to fit between front wheel and tyre assemblies 015L and 015R, and the members each have a forward member section 010LF and 010RF respectively. Between the forward member sections 010RF and 010LF are disposed a feeder house 020 and a feed beater 030, which also fit between the wheels 015L and 015R.

On the left side of the header 020 is a header drive gearbox 022 which provides drive to a header which may be fitted to the feeder house 020 when the combine is in use. Drive is supplied to the header drive gearbox 022 by means of a drive shaft assembly 024, 025, 026 which is fitted to the outside of chassis member 010L/010LF by a number of bearings in support brackets (not shown), and which is in turn driven by rear gearbox 028 which receives drive from an engine of the combine (not shown, but familiar to those skilled in the art). The support brackets are not integral to the chassis and do not bear any of the primary chassis loads, being only there to support the secondary load of the bearings which support the drive shaft assembly. As is apparent, there is a not insignificant gap G1 between the outside of the chassis member 010L/010LF and the inside face 015Li of the wheel/tyre assembly 015L, which is necessary in order to allow the space for drive shaft assembly 024, 025, 026, comprising shaft 024, universal joint 025 and shaft 026, to transmit drive from rear gearbox 028 to header drive gearbox 022.

On the right side of the combine is a drive pulley 032 and belt 034 which drive the feed beater 030. Belt 034 is driven by a further pulley rearwards in the machine (not shown) and ultimately by the engine of the machine (not shown) in a manner known to the skilled person. As for the left side of the machine, on this right side of the machine is a gap G2 between the outside of the chassis member 010R/010RF and the inside face 015Ri of the wheel/tyre assembly 015R. Gap G2 is necessary to allow the space for the pulley and belt 032/034 to transmit drive to the feed beater.

Between the inside faces 015Li and 015Ri of the wheel/tyre assemblies is gap G0 into which the chassis 010 of the machine 001 must fit, as well as the pulley and belt assembly 032 and 034 and the drive shaft assembly 024, 025, 026. This results in a chassis width G3 and also an inner chassis space width G4. In the inner chassis width G4, other systems of the machine 001 may need to be fitted, such as a threshing device and a cleaning shoe. It is apparent that the presence of belt/pulley 034/032 and drive shaft assembly 024/025/026 has a direct effect on the potential design width of these other systems. Ultimately this may have a direct effect on the potential processing throughput of the machine, representing a significant design constraint. It will be noted that the width of the chassis plus any externally mounted drivelines may be greater if narrower wheel/tyre assemblies are fitted to the machine 001; however, this is disadvantageous, as wider wheels are preferable in order to minimise soil compaction of the machine as it traverses fields, and so is usually not a preferred option. Retaining wide tyres, and even being able to replace them with even wider ones, would be preferable.

FR-A-2,190,072 discloses a combine harvester similar to that described above, wherein a driveline is located between the front wheels in a space between the chassis and the wheels.

It would thus be advantageous to minimise the amount of the overall width envelope of the machine which is taken up by the drivelines.

### Summary of Invention

Accordingly there is provided in an aspect a combine harvester, comprising:
A pair of front wheels having inner surfaces;
A main chassis frame, said main chassis frame comprising generally longitudinal chassis members which are disposed at least partially between the front wheels;
At least one driveline, said driveline comprising at least one drive element also disposed at least partially between the front wheels;
wherein said drive element is disposed at least partially within at least one of the chassis members.

The advantage of this arrangement is that the drive line elements are no longer filling so much of the gap between the chassis and the inside of the wheels, thus allowing for either a wider chassis, wider wheels (or wheel/tyre assemblies), or potentially both. If a wider chassis is allowed, this has the advantage of providing greater space within a combine for other systems (such as thresher, shoe, etc), which could potentially allow greater throughput. Additionally, a wider chassis is likely to be stronger with greater torsional stability, providing a better base for all the systems present in a typical combine harvester.

The drive element may be a drive shaft or universal joint, or even a gearbox, in a drive shaft drive line system. The drive element may be a belt or a pulley of a belt-and-pulley drive line system.

The chassis member may be a twin-skinned hollow member. This is a not untypical arrangement. Where it is a twin-skinned hollow member, the drive element may be disposed wholly within the chassis member for at least a portion of its length. In other words the drive element (such as a drive shaft or a belt) is enclosed within the structure of the chassis member - at least for some of its length, and at least for the length of chassis necessary to ensure the drive line element is within the structure of the chassis where this is alongside the inside of the wheel/tyre assembly.

Alternatively the drive line element may only be disposed partially within the chassis member. This may make it easier to access whilst still taking up less width within the footprint of the machine.

One of the skins of a twin-skinned hollow member may be constructed to provide a shaped recess in which all or part of a drive line member may be disposed. The recess may take the form of a part of the cross-section of a hollow cylinder, into which (for example) a drive-shaft may be partially or wholly disposed. Other recess shapes may be used, for example a square section or hexagonal section, and if the drive line element is other than a drive shaft (such shafts usually being cylindrical), such as a belt of a belt drive, the recess shape may be chosen accordingly. A suitable recess for a belt element of a belt drive may be of rectangular cross section, for example. The recess may be, and preferably would be for efficiency, a load-bearing element in its own right.

There may be a cover provided to effectively 'seal off' the recess so as to safely cover the drive line element - this cover may also provide additional strength to the chassis member and will also allow access (for maintenance, etc) to the drive line element (shaft, belt, whatever).

### Specific Description

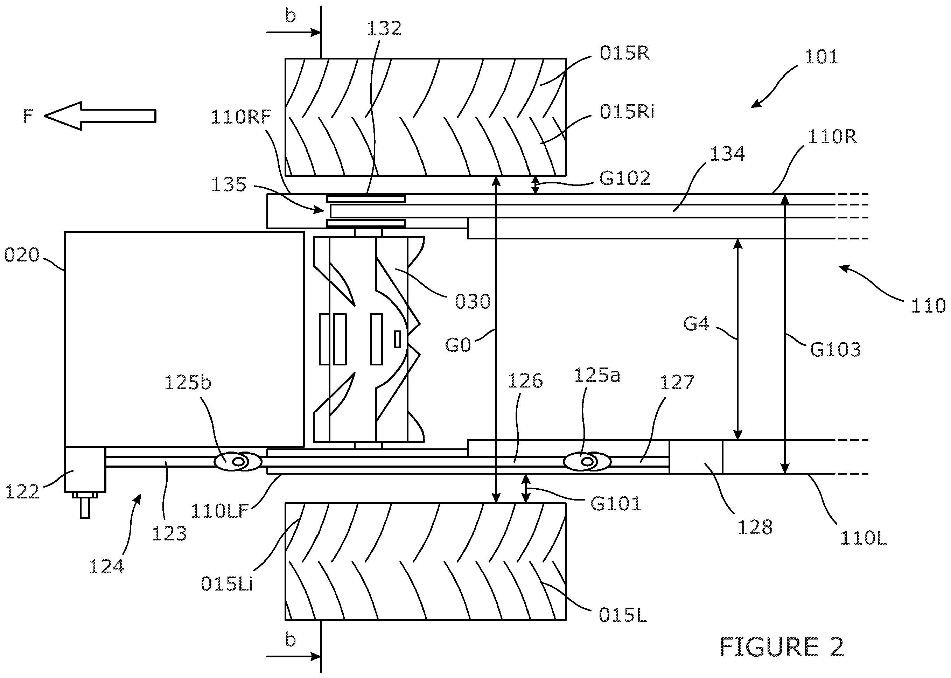

The invention will now be described in more detail by reference to the attached Figures 2 to 4.

Figure 2 shows a schematic plan view of an arrangement of components of a combine harvester 101 that is broadly equivalent and with largely similar systems as the combine 001 of Figure 1, but arranged in accordance with aspects and embodiments of the invention. Figure 2 shows a combine harvester 101 with a chassis 110 comprising two main chassis members 110L and 110R. As per the members 010L and 010R in Figure 1, the chassis members 110L and 110R are constructed to fit within the front wheel and tyre assemblies 015L and 015R, and the members 110L, 110R have forward member sections 110LF and 110RF respectively. Between the forward member sections 110LF and 110RF are disposed feeder house 020 and feed beater 030, which also must fit between the wheel/tyre assemblies 015L and 015R.

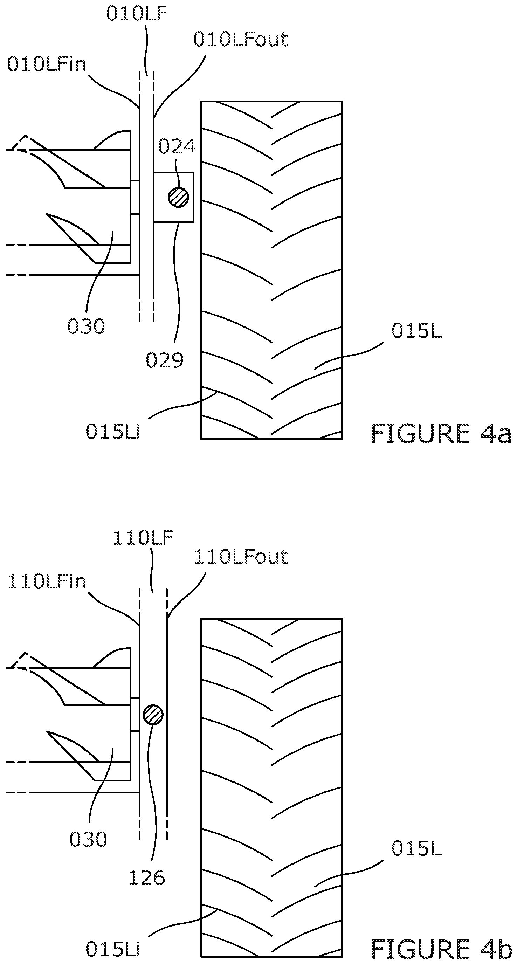

On the left side of the header 020 is a header drive gearbox 122 which provides drive to a header which may be fitted to the feeder house 020 when the combine is in use. Drive is supplied to the header drive gearbox 122 by a drive shaft assembly 124, comprising shaft 123, universal joint 125b, shaft 126, universal joint 125a, and shaft 127, which is in turn driven by rear gearbox 128 which receives drive from an engine of the combine harvester (not shown). In this embodiment, main chassis member 110L and forward member section 110LF thereof are both significantly wider than the equivalent components in Figure 1, and as is apparent, parts of the drive shaft assembly 124, and gearbox 128, are actually enclosed within these wider chassis member sections. Specifically, shaft 127, universal joint 125a, and part of shaft 126 are all enclosed by the chassis member sections 110L and/or 110LF. As a result, whilst the internal chassis width G4 is unchanged over the same width G4 of the machine of Figure 1, the overall chassis width G103 of the machine 101 is wider than the chassis width G3 of the combine of Figure 1, and the gap G101 is smaller than gap G1 of Figure 1. However, there are now no mechanisms intruding into this space G101, and so the entirety of gap G101 is available, either so as to enable the chassis 110 to be designed to have a greater overall width G103 (and thus a greater internal width G4, so that processing capacity of the machine may be improved), or to allow the wheel/tyre assemblies 015U015L to be wider whilst not exceeding the overall width of the machine 001 of Figure 1. Figure 4b shows a partial sectional schematic view of the left side of combine 101, in the direction of arrows bb of Figure 2. Forward chassis member 110LF is seen with inner skin 110LFin and outer skin 110LFout. These are equivalent to the items 010LF, 010LFin and 010LFout seen in Figure 4a, which is a partial sectional schematic view of the left side of the prior art embodiment 001 of Figure 1 (in direction of arrows aa). However, it can be seen that shaft 126 of combine 101 is in this embodiment enclosed between these chassis member skins, whereas shaft 024 of combine 001 of Figure 1 is outside the chassis member and is supported (as seen in Figure 4a) by bracket 029. It will readily be recognised by the skilled person that an internal bracket could be provided within chassis member 110LF if required to support shaft 126.

On the right side of the combine, a belt drive assembly 135 comprising drive pulley 132 and belt 134 drive feed beater 030, where belt 134 is driven by a further pulley rearwards in the machine (not shown) and ultimately by the engine of the machine (not shown). Similarly as for the drive shaft assembly 124 on the left side of the machine, the belt drive assembly 135 is now enclosed within chassis member sections 110R and 110RF, which are wider than their equivalents 010R and 010RF in the combine of Figure 1. In this way, although the overall chassis width G103 is greater than chassis width G3 Figure 1, and the gap G102 is smaller than the gap G2 of Figure 1, this gap G102 is clear of any obstruction or intervening mechanism, meaning that this gap is available to make design improvements elsewhere - such as increasing the overall width G103 of the chassis (thus allowing for more space in the width G4 for other processing mechanisms), or by allowing a wider wheel/tyre assembly 015R.

A further consequence of the arrangements of the drivelines 124 and 135 within the chassis members 110L/110LF and 110R/110RF respectively of the machine is that, as noted, the chassis members have of necessity become wider. This gives the machine greater strength and, potentially, significantly better torsional rigidity - not due just to the greater width of the chassis members themselves, but also due to the greater overall width G103 (as compared to G3 of Figure 1) of the chassis 110, as will be readily understood by one skilled in the art. This greater torsional rigidity is advantageous as the machine is then a more stable platform for all the systems which are installed in and on it.

A yet further advantage of the arrangement shown in Figure 2 is that as the drivelines 124, 135 are secreted inside the chassis members, they are automatically concealed from the user and thus do not require the installation of safety shields - unlike the arrangement of Figure 1, in which space and fittings are also required in order to provide additional safety shields to protect the user from the drivelines. Any extra weight penalty that may be incurred by the wider/stronger chassis members is thus offset by the deletion of the requirement for such shielding.

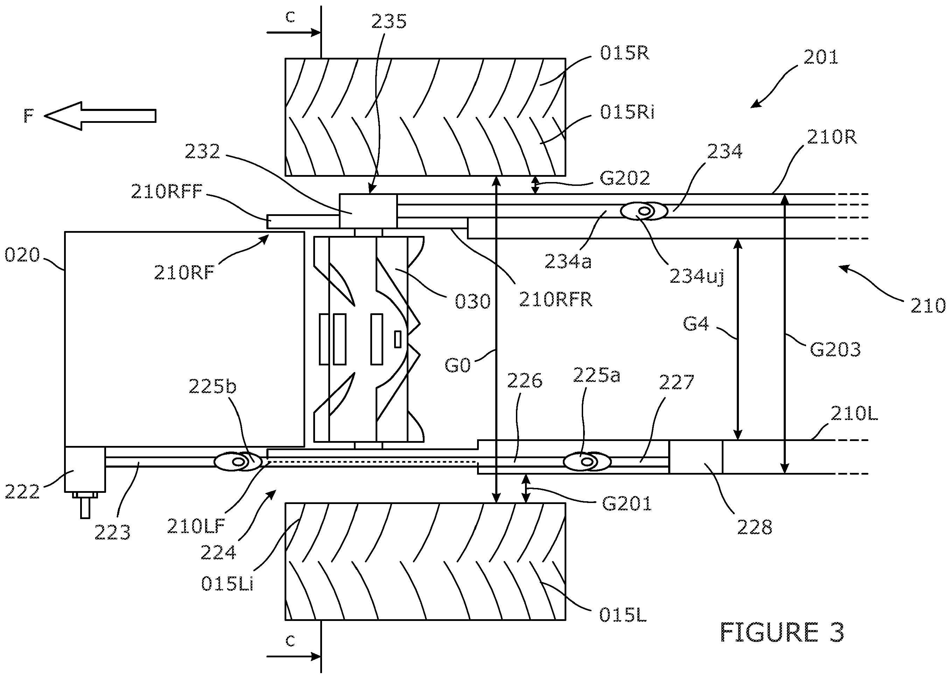

Figure 3 also shows a schematic plan view of an arrangement of components of a further combine harvester 201 that is broadly equivalent and with largely similar systems as the combine 001 of Figure 1, but arranged in accordance with further aspects and embodiments of the invention.

Figure 3 shows a combine harvester 201 with a chassis 210 comprising two main chassis members 210L and 210R which fit between front wheel and tyre assemblies 015L and 015R. The chassis members 210L and 210R have forward member sections 210LF and 210RFR/210RFF respectively. Between the forward member sections 210LF and 210RFR/210RFF are a feeder house 020 and a feed beater 030, all of which also fit between the front wheel/tyre assemblies 015L and 015R.

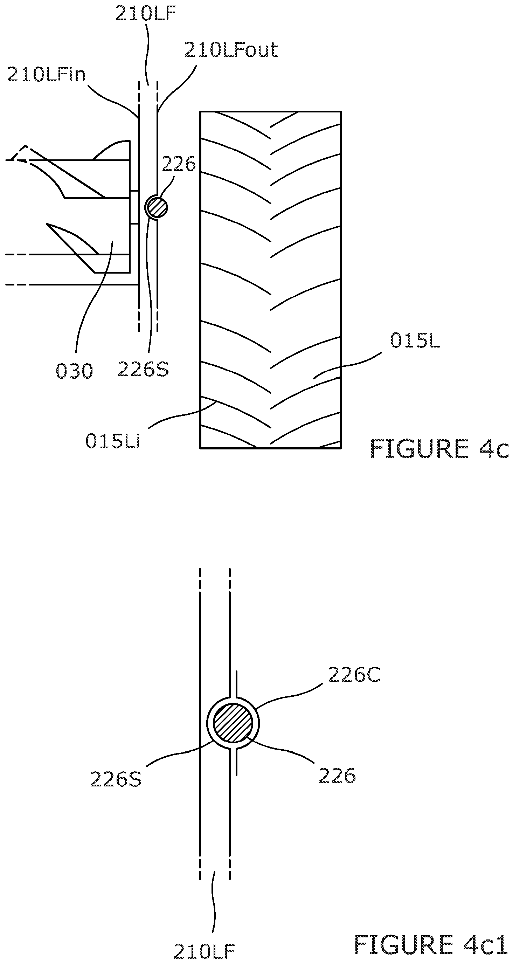

On the left side of the header 020 is a header drive gearbox 222 which provides drive to a header which may be fitted to the feeder house when the combine is in use. Drive is supplied to the header drive gearbox 222 by a drive shaft assembly 224, comprising shaft 223, universal joint 225b, shaft 226, universal joint 225a and shaft 227, which is in turn driven by rear gearbox 228 which receives drive from an engine of the combine harvester (not shown). In this embodiment, main chassis member 210L is wider than equivalent member 010L in Figure 1, and shaft 227, universal joint 225a and part of shaft 226 are enclosed within this wider chassis member. However, forward chassis member section 210LF is no wider than equivalent member 010LF of Figure 1; instead, forward member section 210LF only partially surrounds part of the drive shaft 226, a semi-cylindrical section now comprising part of the outer wall of the member section 210LF to accommodate the shaft 226. This can be seen also in Figure 4c, which is a partial sectional schematic view of the left side of the embodiment of Figure 3, in the direction of arrows cc of Figure 3. Figure 4 shows twin-skinned forward member section 210LF, with an inner skin 210LFin and an outer skin 210LFout. These are equivalent to the items 010LF, 010LFin and 010LFout seen in Figure 4a, which is a partial sectional schematic view of the left side of the prior art embodiment of Figure 1. As can be seen, whereas outer skin 010LFout of the member 010LF of Figure 1/4a is a planar skin, the outer skin 210LFout of the member 210LFout is planar but with the addition of a semi-cylindrical component 226S which accommodates part of the shaft 226 (in cross-section as seen in Figure 4c), and for part of its length (as seen in planar view in Figure 3). Thus there is a discontinuity in the outer skin 210LFout of the member 210LF, but there is little or no degradation in strength of the component. In use a cover, in the form of component 226C, as seen in Figure 4c1, may be added, which may serve to both provide a safety cover for the uncovered portion of shaft 226 as well as provide additional strength to the outer wall 210LFout in the region of the shaft. It will be readily realised by the skilled person that cover 226C may be screwed, bolted, riveted, glued, or welded into position, among other arrangements.

It will be apparent that this arrangement of drive shaft assembly 224 with chassis components 210L and 210LF results in a greater clearance between inner surface 015Li of wheel/tyre 015L and driveshaft assembly 224 (particularly shaft 226) than there is between the wheel/tyre assembly 015L and the drive line components 024, 025 and 026 of Figure 1. Also, although gap G201 (between wheel/tyre 015Li and chassis member 210L of Figure 3) is smaller than the gap G1 (between wheel/tyre 015Li and chassis member 010L of Figure 1), because chassis member 210L is wider than chassis member 010L, the gap G201 is free of mechanisms and is therefore space that can (in design) be filled either by widening the overall chassis 210 so that width G203 is larger/wider (and consequently internal width G4 is wider, allowing larger internal components and potentially more throughput), or by allowing a wider wheel/tyre assembly 015L on combine 201 whilst remaining within the overall width footprint of equivalent vehicle 001.

On the right hand side of combine 201, the belt drive system 032/034 of the combine 001 of Figure 1 has been replaced by drive system 235, comprising shaft 234, universal joint 234uj and shaft 234a which drive feed beater gearbox 232, and which in turn are ultimately driven by an engine of the combine (not shown). What is apparent is that main chassis member 210R is wider than equivalent component 010R of Figure 1 and encloses the drive shaft 234, the universal joint 234uj and part of the shaft 234a, whilst a forward chassis member 210RF is similarly wider at a rear portion 210RFR to accommodate part of shaft 234a and also the gearbox 235. The front part 210RFF of forward chassis member section 210RF is unchanged and is similar in thickness to the forward chassis member section 010RF of the combine 001 of Figure 1. Gap G202 between the inner face 015Ri of the wheel/tyre assembly and the outer face of the chassis member 210R is smaller than equivalent gap G2 of Figure 1, but the gap is free of mechanical obstructions and thus the designer is free to reduce or fill this gap, with either a wider combine chassis G203 (and consequently greater internal width G4 for bigger systems allowing greater throughput), or wider wheel/tyre assembly 015R whilst remaining within an overall vehicle width footprint as per combine 001.

Whilst in Figure 3, a belt/pulley system such as that of Figures 1 (032/034) and 2 (135) has been replaced by a drive shaft / gearbox assembly 235, and this may be seen to be a slightly more expensive option, a shaft/gearbox assembly is likely to be able to provide more power to the feed beater 030 (without slipping, etc) and be simpler, more elegant and more robust. It is therefore an advantage to so replace the belt/pulley with such a drive shaft/gearbox arrangement.

As for the embodiment 101 of Figure 2, the combine embodiment 201 of Figure 3 has a chassis of greater stiffness and torsional stiffness than that of combine 001 of Figure 1, due to both the wider chassis members 210L/210R and the consequent greater chassis width G203 of the chassis itself - with potential design freedom to further increase the chassis width into the gaps G202 and G201 and so provide yet further torsional rigidity, which is advantageous when building a combine harvester in which a number of moving mechanical components are installed and which is subject to a large number of high loads, both static and dynamic.

Clearly the skilled person will recognise that various aspects, embodiments and elements of the present application, including as illustrated in the figures or described in the clauses above, may be arranged in differing combinations. The invention will be defined by the following claims.

## Claims

1. A combine harvester (101; 201), comprising:
a pair of front wheels (015L, 015R) having inner surfaces (015Li, 015Ri);
a main chassis frame (110; 210), said main chassis frame comprising generally longitudinal chassis members (110L, 110R, 110LF, 110RF; 210L, 210R, 210LF, 210RF) which are disposed at least partially between the front wheels;
at least one driveline (124, 135;224, 235), said driveline comprising at least one drive element also disposed at least partially between the front wheels;
**characterised in that** said drive element is disposed at least partially within at least one of the chassis members (110L, 110R, 110LF, 110RF; 210L, 210R, 210LF, 210RF).

2. A combine as claimed in claim 1, wherein the drive element is one or more of a drive shaft (126;226,234a), a universal joint or a gearbox (132).

3. A combine as claimed in claim 1, wherein the drive element is one or more of a belt (134) or a pulley (132).

4. A combine as claimed in claim 1, wherein the at least one chassis member is a twin-skinned hollow member.

5. A combine as claimed in claim 4, wherein the drive element is disposed wholly within the at least one chassis member for at least a portion of its length.

6. A combine as claimed in claim 4, wherein the drive element is disposed partially within the at least one chassis member for at least a portion of its length.

7. A combine as claimed in claim 6, wherein at least one skin of the hollow chassis member is a load-bearing element and comprises a partial cross-section of a hollow cylinder, in which said partial cross-section of hollow cylinder the at least partial part of the drive element is disposed for at least a portion of its length.

8. A combine as claimed in claim 7, wherein the drive element is a cylindrical drive shaft (126;226) and the drive shaft is partially enclosed along a portion of its length in the partial cross-section of hollow cylinder.

9. A combine as claimed in claim 8, wherein there is further provided a cover (226C) comprising a complementary partial cross-section of hollow cylinder so as to fully enclose the drive shaft (226) along at least a portion of its length.

10. A combine as claimed in claim 6 wherein at least one skin of the hollow chassis member is a load-bearing element and comprises a recess (226S), in which said recess the at least partial part of the drive element is disposed for at least a portion of its length.

## Patentansprüche

1. Mähdrescher (101; 201) mit:
einem Paar vorderer Räder (015L, 015R) mit Innenflächen (015Li, 015Ri);
einem Hauptchassisrahmen (110; 210), wobei der Hauptchassisrahmen im Wesentlichen in Längsrichtung orientierte Chassiselemente (110L, 110R, 110LF, 110RF; 210L, 210R, 210LF, 210RF) aufweist, die zumindest teilweise zwischen den vorderen Rädern angeordnet sind;
mindestens einem Antriebsstrang (124, 135; 224, 235), wobei der Antriebsstrang mindestens ein Antriebselement aufweist, welches zumindest teilweise zwischen den vorderen Rädern angeordnet ist;
**dadurch gekennzeichnet, dass** das Antriebselement zumindest teilweise in mindestens einem der Chassiselemente (110L, 110R, 110LF, 110RF; 210L, 210R, 210LF, 210RF) angeordnet ist.

2. Mähdrescher nach Anspruch 1, wobei das Antriebselement eine Antriebswelle (126; 226, 234a), ein Kardangelenk und/oder ein Getriebe (132) ist.

3. Mähdrescher nach Anspruch 1, wobei das Antriebselement ein Gurt (134) und/oder ein Riemen (132) ist.

4. Mähdrescher nach Anspruch 1, wobei das mindestens eine Chassiselement ein doppelschichtiges Hohlelement ist.

5. Mähdrescher nach Anspruch 4, wobei das Antriebselement zumindest mit einem Längsabschnitt vollständig innerhalb des mindestens einen Chassiselements angeordnet ist.

6. Mähdrescher nach Anspruch 4, wobei das Antriebselement zumindest mit einem Längsabschnitt teilweise in dem mindestens einen Chassiselement angeordnet ist.

7. Mähdrescher nach Anspruch 6, wobei mindestens eine Schicht oder Haut des hohlen Chassiselements ein lastabstützendes Element ist und einen Teilquerschnitt in Form eines Hohlzylinders aufweist, wobei in dem hohlzylinderförmigen Teilquerschnitt zumindest der Teil des Antriebselements mit mindestens einem Längsabschnitt angeordnet ist.

8. Mähdrescher nach Anspruch 7, wobei das Antriebselement eine zylindrische Antriebswelle (126; 226) ist und die Antriebswelle teilweise entlang eines Längsabschnitts in dem hohlzylinderförmigen Teilquerschnitt eingeschlossen ist.

9. Mähdrescher nach Anspruch 8, wobei des Weiteren eine Abdeckung (226C) vorhanden ist, die einen komplementären hohlzylinderförmigen Teilquerschnitt aufweist, um die Antriebswelle (226) zumindest entlang eines Längsabschnitts vollständig einzuschließen.

10. Mähdrescher nach Anspruch 6, wobei mindestens eine Schicht oder Haut des hohlen Chassiselements ein lasttragendes Element ist und eine Ausnehmung (226S) aufweist, wobei in der Ausnehmung zumindest ein Teil des Antriebselements mit mindestens einem Teil seiner Längserstreckung angeordnet ist.

## Revendications

1. Moissonneuse-batteuse (101 ; 201), comprenant :
une paire de roues avant (015L, 015R) présentant des surfaces internes (015Li, 015Ri) ;
une armature principale de châssis (110 ; 210), ladite armature principale de châssis comprenant :
des éléments de châssis sensiblement longitudinaux (110L, 110R, 110LF, 110RF ; 210L, 210R, 210LF, 210RF) qui sont disposés au moins partiellement entre les roues avant ;
au moins une transmission (124, 135 ; 224, 235), ladite transmission comprenant au moins un élément d'entraînement aussi disposé au moins partiellement entre les roues avant ;
**caractérisée en ce que** ledit élément d'entraînement est disposé au moins partiellement à l'intérieur d'au moins l'un des éléments de châssis (110L, 110R, 110LF, 110RF ; 210L, 210R, 210LF, 210RF).

2. Moissonneuse-batteuse selon la revendication 1, dans laquelle l'élément d'entraînement est l'un ou plusieurs d'un arbre d'entraînement (126 ; 226 ; 234a), d'un joint universel ou d'une boîte de vitesse (132).

3. Moissonneuse-batteuse selon la revendication 1, dans laquelle l'élément d'entraînement est l'un ou plusieurs d'une courroie (134) ou d'une poulie (132).

4. Moissonneuse-batteuse selon la revendication 1, dans laquelle le au moins un élément de châssis est un élément creux à double paroi.

5. Moissonneuse-batteuse selon la revendication 4, dans laquelle l'élément d'entraînement est disposé entièrement à l'intérieur du au moins un élément de châssis sur au moins une partie de sa longueur.

6. Moissonneuse-batteuse selon la revendication 4, dans laquelle l'élément d'entraînement est disposé partiellement à l'intérieur du au moins un élément de châssis sur au moins une partie de sa longueur.

7. Moissonneuse-batteuse selon la revendication 6, dans laquelle au moins une paroi de l'élément de châssis creux est un élément porteur de charge et présente une section transversale partielle en un cylindre creux, la partie au moins partielle de l'élément d'entraînement étant disposée sur au moins une partie de sa longueur dans ladite section transversale partielle en cylindre creux,.

8. Moissonneuse-batteuse selon la revendication 7, dans laquelle l'élément d'entraînement est un arbre d'entraînement cylindrique (126 ; 226) et l'arbre d'entraînement est partiellement contenu sur une partie de sa longueur dans la section transversale partielle en cylindre creux.

9. Moissonneuse-batteuse selon la revendication 8, dans laquelle il est, en outre, prévu un couvercle (226C) présentant une section transversale partielle en cylindre creux complémentaire de manière à envelopper totalement l'arbre d'entraînement (226) le long d'au moins une partie de sa longueur.

10. Moissonneuse-batteuse selon la revendication 6, dans laquelle au moins une paroi de l'élément de châssis creux est un élément porteur de charge et comprend une cavité (226S), la partie au moins partielle de l'élément d'entraînement étant disposée sur au moins une partie de sa longueur dans ladite cavité.
